# EUROPEAN PATENT SPECIFICATION

(11) **EP 1 607 209 B1**
(45) Date of publication and mention of the grant of the patent: **15.04.2009**
(21) Application number: 04701085.5
(22) Date of filing: 09.01.2004
(51) Int. Cl.: B29C 59/04, B29C 47/32, B29C 43/24, B30B 3/00, B29L 21/00, B29L 7/00

(54) **METHOD AND DEVICE FOR FORMING GROOVE LINE IN SHEET-LIKE MEMBER**
VERFAHREN UND VORRICHTUNG ZUR BILDUNG EINER RILLENLINIE AUF EINEM BLATTFÖRMIGEN ELEMENT
PROCEDE ET DISPOSITIF PERMETTANT DE FORMER UNE RAINURE DANS UN ELEMENT DE TYPE FEUILLE

(30) Priority: 14.01.2003 JP 2003006218
(43) Date of publication of application: 21.12.2005
(73) Proprietor: Bridgestone Corporation, Tokyo 104-8340 (JP)
(72) Inventor: SUDA, Nobuyuki, c/o Bridgestone Corporation, Kodaira-city, Tokyo 187-8531 (JP)
(74) Representative: Whalley, Kevin
(86) International application number: PCT/JP2004/000088
(87) International publication number: WO 2004/062887

(56) References cited:
- EP-A- 1 256 439
- DE-A1- 4 225 506
- GB-A- 756 122
- JP-A- 2000 289 122
- JP-A- 2000 301 560
- JP-A- 2001 079 938
- JP-Y2- 63 043 125
- US-A- 3 948 304
- US-A- 5 030 079
- PATENT ABSTRACTS OF JAPAN vol. 2000, no. 13, 5 February 2001 (2001-02-05) & JP 2000 289122 A (BRIDGESTONE CORP), 17 October 2000 (2000-10-17)
- PATENT ABSTRACTS OF JAPAN vol. 013, no. 265 (M-839), 19 June 1989 (1989-06-19) & JP 01 064826 A (NAKA TECH LAB), 10 March 1989 (1989-03-10)
- PATENT ABSTRACTS OF JAPAN vol. 1996, no. 06, 28 June 1996 (1996-06-28) & JP 08 039594 A (KOBE STEEL LTD), 13 February 1996 (1996-02-13)

## Description

The present invention relates to a method of forming a time structural component according to the preamble of claim 1 and to an apparatus for producing a rubber sheet according to the preamble of claim 6.

A method and an apparatus of this kind is known from e.g. DE-A- 4 225 506. Sheets including inner liners of tires are wound round a forming drum in multiple layers and the multiple layers of the sheets are laminated together to form a structural component and a tire is formed by forming the structural component. In some cases, air is caught between the sheets when the sheets are laminated together.

Although air scarcely remains between the layered sheets when the sheets have smooth surfaces, once air is caught between the laminated sheets having the smooth surfaces, it is very difficult to remove the air completely from the layered sheets. Voids formed by the air remaining in the laminated sheets will deteriorate the quality of the tire.

A technique disclosed in JP 63-43125 U forms a plurality of grooves in a surface of a sheet to enable air caught between the sheets to escape through the grooves.

An unvulcanized rubber sheet disclosed in JP 63-43125 U is provided with a plurality of grooves in a surface thereof. Any method of forming the grooves is not mentioned in JP 63-43125 U. Generally, a plurality of grooves are formed in the surface of a rubber sheet by a method such as that disclosed in Japanese Patent. No. 3204747 or JP 59-99805 U, that presses the rubber sheet between a cylindrical ridge roller provided with a plurality of ridges and a cylindrical counter roller.

A groove forming process for forming grooves in the surface of a sheet is performed after a sheet forming process. When grooves are formed in a sheet after the sheet has been completed by rolling, grooves are formed in irregular shapes by the groove forming process due to the variation of the temperature of the rubber sheet that occurs depending on process conditions including processing speed of the sheet forming process.

When the sheet forming process includes an embossing process for forming protrusions and recesses in the surface of a rubber sheet, deep grooves can be formed in the protrusions but it is difficult to form grooves in the recesses by pressing the cylindrical ridge roller against the surface of the rubber sheet provided with the protrusions and recesses.

For example, suppose that a structural component of a tire is formed by superposing a plurality of sheets having a uniform thickness and is fabricated by rolling. If the plurality of sheets have different widths, namely different dimensions across the length of the sheets, respectively, the structural component of the tire has an irregular thickness. When a cylindrical ridge roller is pressed against the surface of the structural component having an irregular thickness, grooves of a fixed depth cannot be formed in the surface of the structural component.

When a green tire is subjected to a tire forming process and/or a vulcanizing process, the green tire expands and deforms outward. Shoulders, namely, humps, of the green tire tend to expand more greatly than other parts. Therefore, when sheets having the same thickness are used for forming a green tire, the rubber layer of a vulcanized tire formed by vulcanizing the green tire will have an irregular thickness. To prevent this, sheets of an irregular thickness having parts corresponding to the shoulders (humps) having a thickness greater than those of other parts are often used for forming a tire to prevent irregular deformation. However, grooves of uniform depth cannot be formed in the surfaces of such sheets having an irregular thickness, by pressing the ridge roller against the surface of the sheet formed by rolling.

The present invention has been made in view of those problems and it is therefore the object of the present invention to provide a method of producing a sheet with grooves, capable of reducing manufacturing processes and of forming uniform grooves in a sheet irrespective of whether or not the sheet has been processed by an embossing process.

Attention is also drawn to the disclosures of JP-2000-289122A; JP-O1-064826A; JP-08-039594A; DE-4225506A; US-A-5030079; EP-A-1256439; GB-756122A; US-A-3948304; JP-2001-079938A; JP-2000-301560A and JP-63-043125Y; and also JP-A-07-308984.

The present invention provides a method of forming a tire structural component as defined in claim 1.

Particular embodiments of the invention as defined in claim 1 are the subject of the dependent claims 2 to 5.

The method of the invention also preferably further comprises laminating said rubber sheet on a second sheet with the profiled surface formed with the grooves of the rubber sheet facing said second sheet; and
attaching said rubber sheet to said second sheet to form the tire structural component.

By this method, the steps of a manufacturing process can be reduced and working time can be curtailed by simultaneously forming the sheet and the plurality of grooves by feeding the rubber material between the pair of rolling rollers, at least one of the rollers being provided with the plurality of fine ridges in its surface.

This method is not subject to the variation of the temperature of the sheet that occurs depending on the sheet processing speed and uniform grooves can be formed even if the sheet has an irregular thickness. Consequently, a sheet of a stable, high quality can be manufactured.

According to the present invention, the embossing roller provided with the ridges has an embossing surface for forming an embossed surface in the surface of the sheet simultaneously with the forming of said ridges. Thus, furrows and a pattern of grooves can be simultaneously formed in the surface of the sheet by the embossing roller provided with the ridges and having the embossing surface, and the grooves are formed in uniform shape across any section of the sheet.

The embossing surface includes a plurality of circumferential surfaces having different circumferences.

According to the present invention, a sheet formed by extruding a rubber material by a roller-head extruder may be fed to and may be rolled by the pair of rolling rollers. The pair of rolling rollers may be a pair of calendar rollers.

The invention also provides - as defined in claim 6 - an apparatus for producing a rubber sheet with a profiled surface with grooves, comprising:
a pair of rolling rollers, at least one of which is an embossing roller having a circumferential profile surface including a plurality of circumferential surfaces respectively having different circumferences;
means for feeding a rubber material between the pair of the rolling rollers to form the rubber material into a rubber sheet of non-uniform thickness, which has a profiled surface complementary to said profile surface of the embossing roller;
characterized in that:
said circumferential profile surface is provided with a plurality of fine ridges thereon, to form a plurality of grooves complementary to said ridges in the profiled surface of the rubber sheet.

Particular embodiments of the invention as defined in claim 6 are the subject of the dependent claims 7 to 11. Preferably said ridges are formed in a pattern over the circumferential profile surface and have a height in a range of 0.1 to 0.3 mm and a width in a range of 0.5 to 2.0 mm.

The effect of the sheet producing apparatus is the same as that of the sheet producing method.

The embossing surface includes plurality of circumferential surfaces having different circumferences.

The rolling rollers may be included in a head of a roller-head extruder. The pair of rolling rollers may be a pair of calendar rollers.

The ridges are formed in a pattern in the embossing surface. The pattern may be that of substantially parallel V-shaped ridges symmetrical with respect to a middle circumferential line contained in a plane perpendicular to the axis of the embossing roller and crossing the middle of the same axis, and extending with axial and circumferential components from the middle circumferential line toward the opposite ends of the embossing roller. The pattern may be a honeycomb pattern or may be any suitable pattern.

The V-shaped ridges have a height in the range of 0.1 to 0.3 mm and a width in the range of 0.5 to 2.0 mm.

Preferably, the V-shaped ridges have a trapezoidal cross section.

The invention will be further described with reference to one accompanying drawings, in which
Fig. 1 is a perspective view of a roller head extruder in a preferred embodiment of the present invention;
Fig. 2 is a front elevation of a roller head included in the roller head extruder shown in Fig. 1;
Fig. 3 is a fragmentary sectional view of an embossing surface of an embossing roller;
Fig. 4 is a fragmentary sectional view of an unvulcanized rubber sheet;
Fig. 5 is a perspective view for explaining the relation between the embossing roller and an unvulcanized rubber sheet;
Fig. 6 is a sectional view taken on the line VI-VI in Fig. 5;
Fig. 7 is a front view of a roller head included in a second embodiment of the present invention;
Fig. 8 is an enlarged, fragmentary plan view of an embossing surface; and
Fig. 9 is a sectional view taken on the line IX-IX in Fig. 8.

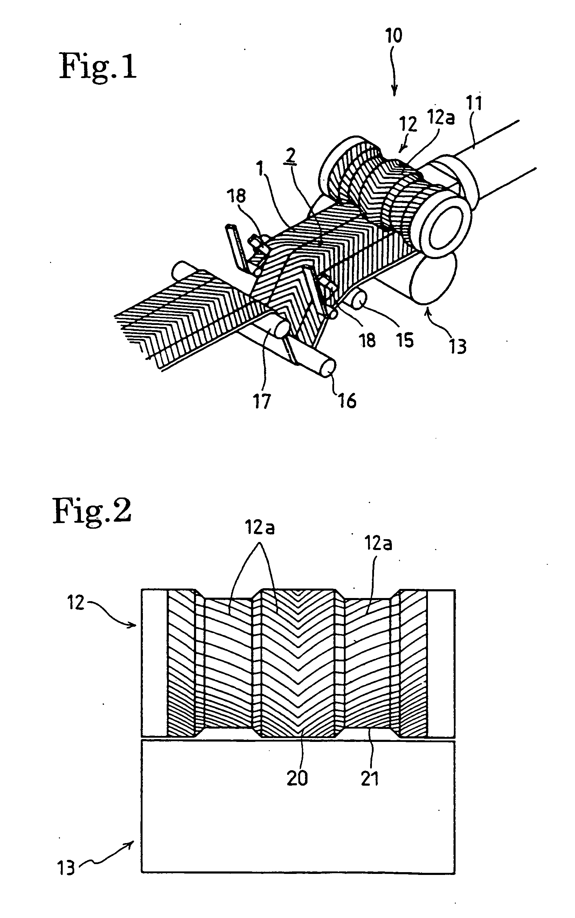

Preferred embodiments of the present invention will be described in connection with Figs. 1 to 6.

A roller head extruder 10 used in a preferred embodiment of the present invention produces an unvulcanized rubber sheet 1. Rollers included in the roller head extruder 10 are changeable.

Referring to Fig. 1, the roller head extruder 10 is a rubber sheet forming apparatus formed by combining an extruder 11, and a roller head including a pair of rolling rollers 12 and 13 opposed to each other and extending across an extruding direction. A rubber material supplied to the extruder 11 is kneaded and forced through the orifice of a die by an internal screw. The extruded rubber material is rolled continuously by the pair of rolling rollers 12 and 13 to form an unvulcanized rubber sheet 1 of a predetermined sectional shape, namely a predetermined profile.

The delivered unvulcanized rubber sheet 1 is guided by guide rollers 15, 16 and 17. A pair of trimming cutters 18 are disposed on the opposite sides of the unvulcanized rubber sheet 1 and spaced a predetermined distance apart from each other. The trimming cutters 18 trim off side parts of the unvulcanized rubber sheet 1 to adjust the width of the unvulcanized rubber sheet 1 to a predetermined width.

The unvulcanized rubber sheet 1 can be formed in a desired width by adjusting the distance between the pair of trimming cutters 18. The unvulcanized rubber sheet 1 is wound round a take-up roller in a roll or cut into strips. The roll of the unvulcanized rubber sheet or the unvulcanized rubber strips are delivered to a forming process.

The upper rolling roller 12 of the pair of rolling rollers 12 and 13 is an embossing roller 12 as shown in Fig. 2. The embossing roller 12 has an embossing surface for giving the unvulcanized rubber sheet 1 a predetermined sectional shape. As shown in Fig. 2, the embossing roller 12 has an annular protrusion 20 and annular grooves 21. Thus the embossing surface of the embossing roller 12 has circumferential surfaces respectively having different circumferences.

According to the present invention, the embossing surface is provided with a V-shaped pattern of a plurality of fine ridges 12a. The V-shaped pattern of the ridges 12a are symmetrical with respect to a plane containing the middle circumferential line of the annular protrusion 20 and perpendicular to the axis of the embossing roller 12. The ridges 12a extend in parallel and obliquely with axial and circumferential components from the middle circumferential line toward the opposite ends of the embossing roller 12.

Although the ridges 12a of the embossing roller 12 may be formed by a machining process, it is preferable to form the ridges 12a by an etching process because the etching process is suitable for forming the ridges 12a in uniform shape.

The roller head extruder 10 is constructed such that the embossing roller 12 having the patterned surface can be replaced with any one of other embossing rollers respectively having different sizes, different embossing surfaces and different patterns of ridges. The embossing roller 12 can be easily replaced with another embossing roller in a short time.

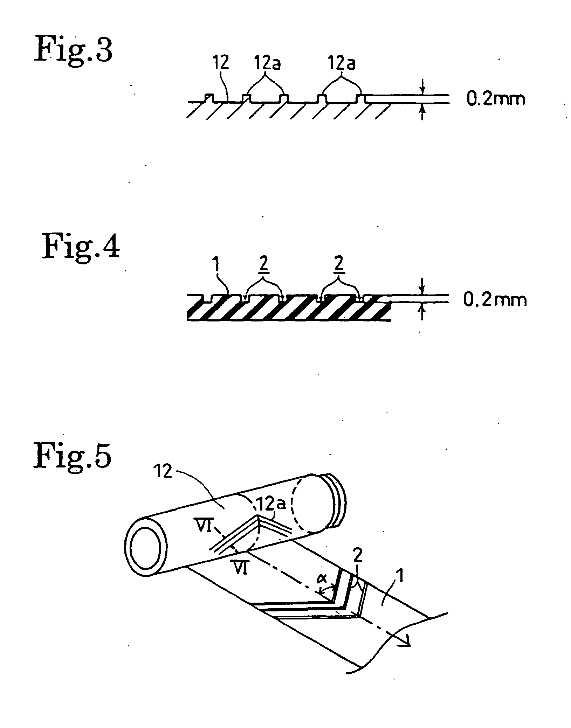

Referring to Fig. 3, the ridges 12a formed in the embossing surface of the rolling roller 12, namely the embossing roller 12, are arranged at equal intervals and have parallel side surfaces, a height in the range of 0.1 to 0.3 mm, for example 0.2 mm, and a width in the range of 0.5 to 2.0 mm, for example 1.5 mm. The distance between adjacent ridges 12a is in the range of 5.0 to 15.0 mm, for example 10.0 mm. The lower rolling roller 13 has a smooth cylindrical surface.

The pair of rolling rollers 12 and 13 roll the extruded rubber material into a sheet and form a pattern of grooves and furrows simultaneously in the sheet to form the unvulcanized rubber sheet 1. A plurality of grooves 2 are formed in a pattern corresponding to that of the V-shaped pattern of the ridges 12a in a surface of the unvulcanized rubber sheet 1.

As shown in Fig. 4, the grooves 2 formed in the embossed surface of the unvulcanized rubber sheet 1 have uniform shape and depth. The depth of the grooves 2 is, for example, 0.2 mm.

Since the step of forming the unvulcanized rubber sheet 1 and that of forming the grooves 2 are carried out simultaneously, processing steps can be reduced and working time can be curtailed. Since the groove forming process is not affected by the variation of the temperature of the unvulcanized rubber sheet 1 due to variation of the processing speed, the uniform grooves can be formed and a sheet of a stable, high-quality sheet can be manufactured.

Fig. 5 shows the relation between the embossed unvulcanized rubber sheet 1 and the embossing roller 12, namely the rolling roller 12. An angle α equal to half the angle between the opposite parts of the V-shaped pattern of each ridge 12a is, for example, 45°. Thus, the grooves 2 formed in the unvulcanized rubber sheet 1 have the same V-shaped pattern with the same angle α.

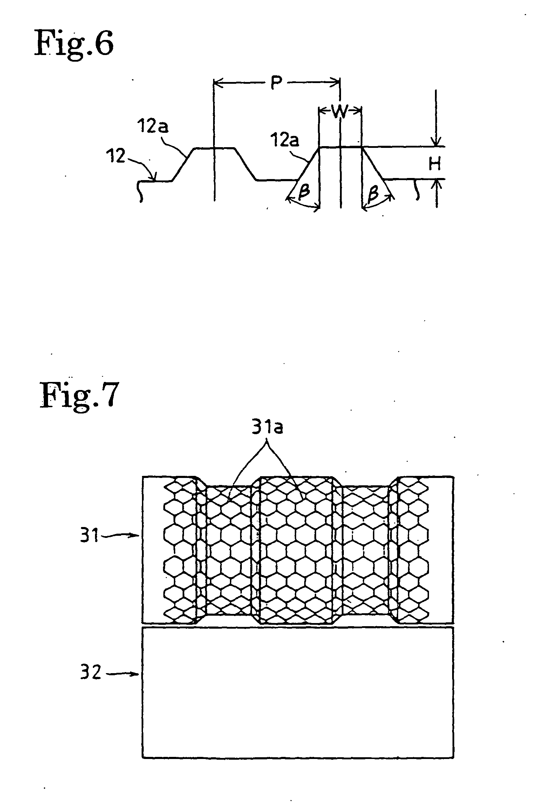

The ridge 12a of the rolling roller 12 has parallel side surfaces as shown in Fig. 3 in sectional view by way of example. Preferably, the ridge 12a has inclined side surfaces and a trapezoidal cross section as shown in Fig. 6 in a sectional view taken on the line VI-VI in Fig. 5. The trapezoidal ridges 12a shown in Fig. 6 have a trapezoidal cross section of a height H of 0.15±0.015 mm, and have a top surface of a width W of 1.5±0.1 mm. The trapezoidal ridges 12a are arranged at pitches P of 10 mm. Preferably, the side surfaces of the trapezoidal ridge 12a are inclined at an angle β of, for example, about 15° to a perpendicular to the top surface of the trapezoidal ridge 12a. The influence of the change of the shape of the ridges 12a with time on the shape of the grooves 2 can be limited to the least extent and the shape of the ridges 12a can be maintained, when the rolling roller 12 is provided with the trapezoidal ridges 12a with the gradually reduced widths toward the top. The grooves 2 formed in the surface of the unvulcanized rubber sheet 1 by the rolling roller 12 provided with the trapezoidal ridges 12a have a width of the groove opening larger than the width of the groove bottom. Such outwardly expanding grooves 2 are not closed easily.

The unvulcanized rubber sheets 1 provided with the many uniform grooves 2 in their surface are used as component members of a tire, such as inner liners, carcass plies, belts or side walls. The unvulcanized rubber sheets 1 are superposed and laminated on a forming drum to form a laminated structure. Air caught between adjacent unvulcanized rubber sheets 1 is able to escape from the laminated structure through the grooves 2. Thus, voids are not formed in the laminated structure by air remaining in the laminated structure and hence the laminated structure not having internal voids can be used as a structural component of a high-quality tire.

A second embodiment of the present invention will be described with reference to Figs. 7 to 9.

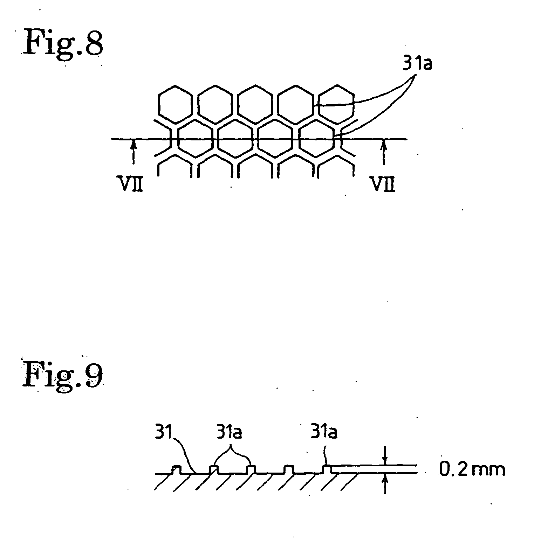

Referring to Fig. 7, a rolling roller 31 employed in the second embodiment has an external shape of a profile similar to that of the external shape of the rolling roller 12 shown in Fig. 2. As shown in Fig. 8, ridges 31a are formed in a honeycomb pattern in the surface of the rolling roller 31. As shown in Fig. 9, the ridges 31a are formed to have the same height of, for example 0.2 mm. A lower rolling roller 32 has a smooth, cylindrical surface.

The pair of rolling rollers 31 and 32 are built into the head of an extruder. The pair of rolling rollers 31 and 32 roll therebetween a rubber material extruded by the extruder into a sheet and form embossed grooves and a honeycomb pattern of fine grooves simultaneously in the sheet to form the unvulcanized rubber sheet. The honeycomb pattern of the fine grooves formed in the surface of the unvulcanized rubber sheet corresponds to the honeycomb pattern of the ridges 31a.

The grooves are formed uniformly in protruding parts and the recessed parts of the surface of the unvulcanized rubber sheet in the same depth of, for example, 0.2 mm and in the same width of, for example, 1.5 mm.

The ridges of the rolling roller may be formed in any one of various patterns. Both the upper and the lower rolling roller may have embossing surfaces to form grooves in both the surfaces of the unvulcanized rubber sheet.

Preferably, the ridges 31a of the rolling roller 31 employed in the second embodiment are trapezoidal ridges as shown in Fig. 6.

A sheet forming apparatus provided with calendar rollers may be used instead of the roller head extruder. The calendar roller or both the calendar rollers are provided with a pattern of ridges to form grooves in an unvulcanized rubber sheet as the unvulcanized rubber sheet is being produced.

## Claims

1. A method of forming a tire structural component, comprising:
preparing a pair of rolling rollers (12, 13), at least one of which is an embossing roller (12) which has an embossing surface including an annular protrusion (20) and an annular groove (21) respectively having different circumferences; and
rolling a rubber material by the pair of rolling rollers (12, 13) into a rubber sheet (1) having a pattern of grooves, **characterized by** the steps of:
providing said embossing surface including said annular protrusion (20) and annular groove (21) with a pattern of fine ridges (12a); and
simultaneously forming in the rubber sheet (1), when the rubber material is rolled into the sheet by the pair of rolling rollers (12, 13), a plurality of grooves (2) in a pattern corresponding to said pattern of fine ridges (12a).

2. A method as claimed in claim 1, further comprising laminating said rubber sheet (1) on a second sheet with the profiled surface formed with the grooves (2) of the rubber sheet (1) facing said second sheet; and
attaching said rubber sheet (1) to said second sheet to form the tire structural component.

3. A method of forming a tire structural component as claimed in claim 1 or 2, wherein said ridges (12a) have a trapezoidal cross-section.

4. A method of forming a tire structural component as claimed in any of claims 1 to 3, wherein said rubber material is fed between the pair of the rolling rollers (12, 13) after the rubber material has been extruded from a roller head extruder (10).

5. A method of forming a tire structural component as claimed in any of claims 1 to 4, wherein a pair of calender rollers are used as the rolling rollers (12, 13).

6. Apparatus for producing a rubber sheet with a profiled surface with grooves, comprising:
a pair of rolling rollers (12, 13), at least one of which is an embossing roller (12) having a circumferential profile surface including a plurality of circumferential surfaces (20, 21) respectively having different circumferences;
means for feeding a rubber material between the pair of the rolling rollers (12, 13) to form the rubber material into a rubber sheet (1) of non-uniform thickness, which has a profiled surface complementary to said profile surface (20, 21) of the embossing roller (12);
**characterized in that**:
said circumferential profile surface (20, 21) is provided with a plurality of fine ridges (12a) thereon, to form a plurality of grooves complementary to said ridges (12a) in the profiled surface of the rubber sheet.

7. Apparatus as claimed in claim 6, wherein said ridges (12a) are formed in a pattern over the circumferential profile surface (20, 21) and have a height in a range of 0.1 to 0.3 mm and a width in a range of 0.5 to 2.0 mm.

8. Apparatus for producing a rubber sheet as claimed in claim 6 or 7, wherein said ridges (12a) have a trapezoidal cross-section.

9. Apparatus for producing a rubber sheet as claimed in any of claims 6 to 8, wherein said pair of rolling rollers (12, 13) is included in a head of a roller head extruder (10).

10. Apparatus for producing a rubber sheet as claimed in any of claims 6 to 9, wherein said rolling rollers (12, 13) are a pair of calendar rollers.

11. Apparatus for producing a rubber sheet as claimed in any of claims 6 to 10, wherein said pattern is that of substantially parallel V-shaped ridges (12a) symmetrical with respect to a middle circumferential line contained in a plane perpendicular to an axis of the embossing roller (12) and crossing the middle of the same axis, and extending with axial and circumferential components from the middle circumferential line toward opposite ends of the embossing roller (12).

## Patentansprüche

1. Verfahren zum Formen eines Reifen-Strukturbestandteils, wobei das Verfahren Folgendes umfasst:
Vorbereiten eines Paars von Walztrommeln (12, 13), von denen wenigstens eine eine Prägetrommel (12) ist, die eine Prägefläche hat, die einen ringförmigen Vorsprung (20) und eine ringförmige Rille (21) mit jeweils unterschiedlichen Umfängen einschließt, und
Walzen eines Gummimaterials durch das Paar von Walztrommeln (12, 13) zu einer Gummibahn (1), die ein Muster von Rillen hat, **gekennzeichnet durch** die folgenden Schritte:
Versehen der Prägefläche, die den ringförmigen Vorsprung (20) und die ringförmige Rille (21) einschließt, mit einem Muster von feinen Stegen (12a) und
gleichzeitiges Formen in der Gummibahn (1), wenn das Gummimaterial **durch** das Paar von Walztrommeln (12, 13) zu der Bahn gewalzt wird, von mehreren Rillen (2) in einem Muster, das dem Muster von feinen Stegen (12a) entspricht.

2. Verfahren nach Anspruch 1, das ferner umfasst, die Gummibahn (1) auf eine zweite Bahn zu laminieren, wobei die mit den Rillen (2) geformte profilierte Oberfläche der Gummibahn (1) zu der zweiten Bahn zeigt, und
Befestigen der Gummibahn (1) an der zweiten Bahn, um den Reifen-Strukturbestandteil zu formen.

3. Verfahren zum Formen eines Reifen-Strukturbestandteils nach Anspruch 1 oder 2, wobei die Stege (12a) einen trapezförmigen Querschnitt haben.

4. Verfahren zum Formen eines Reifen-Strukturbestandteils nach einem der Ansprüche 1 bis 3, wobei das Gummimaterial zwischen das Paar von Walztrommeln (12, 13) zugeführt wird, nachdem das Gummimaterial aus einem Walzenkopfextruder (10) extrudiert worden ist.

5. Verfahren zum Formen eines Reifen-Strukturbestandteils nach einem der Ansprüche 1 bis 4, wobei ein Paar von Kalanderwalzen als die Walztrommeln (12, 13) verwendet wird.

6. Vorrichtung zum Erzeugen einer Gummibahn mit einer profilierten Oberfläche mit Rillen, wobei die Vorrichtung Folgendes umfasst:
ein Paar von Walztrommeln (12, 13), von denen wenigstens eine eine Prägetrommel (12) ist, die eine umlaufende Profilfläche hat, die mehrere umlaufende Flächen (20, 21) mit jeweils unterschiedlichen Umfängen einschließt,
Mittel zum Zuführen eines Gummimaterials zwischen das Paar von Walztrommeln (12, 13), um das Gummimaterial zu einer Gummibahn (1) mit einer ungleichförmigen Dicke zu formen, die eine profilierte Oberfläche, komplementär zu der Profilfläche (20, 21) der Prägetrommel (12), hat,
**dadurch gekennzeichnet, dass**:
die umlaufende Profilfläche (20, 21) mit mehreren feinen Stegen (12a) auf derselben versehen ist, um in der profilierten Oberfläche der Gummibahn mehrere Rillen, komplementär zu den Stegen (12a), zu formen.

7. Vorrichtung nach Anspruch 6, wobei die Stege (12a) in einem Muster über die umlaufende Profilfläche (20, 21) geformt sind und eine Höhe in einem Bereich von 0,1 bis 0,3 mm und eine Breite in einem Bereich von 0,5 bis 2,0 mm haben.

8. Vorrichtung zum Erzeugen einer Gummibahn nach Anspruch 6 oder 7, wobei die Stege (12a) einen trapezförmigen Querschnitt haben.

9. Vorrichtung zum Erzeugen einer Gummibahn nach einem der Ansprüche 6 bis 8, wobei das Paar von Walztrommeln (12, 13) in einem Kopf eines Walzenkopfextruders (10) eingeschlossen ist.

10. Vorrichtung zum Erzeugen einer Gummibahn nach einem der Ansprüche 6 bis 9, wobei die Walztrommeln (12, 13) ein Paar von Kalanderwalzen sind.

11. Vorrichtung zum Erzeugen einer Gummibahn nach einem der Ansprüche 6 bis 10, wobei das Muster dasjenige der im Wesentlichen parallelen V-förmigen Stege (12a) ist, symmetrisch in Bezug auf eine Umfangsmittellinie, die in einer Ebene, senkrecht zu einer Achse der Prägetrommel (12), enthalten ist und die Mitte der selben Achse kreuzt, und sich mit axialen und umlaufenden Bestandteilen von der Umfangsmittellinie zu den entgegengesetzten Enden der Prägetrommel (12) erstreckt.

## Revendications

1. Procédé de formation d'un composant structural d'un bandage pneumatique, comprenant les étapes ci-dessous :
préparation d'une paire de rouleaux de laminage (12, 13), dont au moins un est constitué par un rouleau de gaufrage (12) comportant une surface de gaufrage englobant une saillie annulaire (20) et une rainure annulaire (21), ayant respectivement des circonférences différentes ; et
laminage d'un matériau de caoutchouc par la paire de rouleaux de laminage (12, 13) en une feuille de caoutchouc (1) comportant un motif de rainures, **caractérisé par** les étapes ci-dessous :
application sur ladite surface de gaufrage, englobant ladite saillie annulaire (20) et ladite rainure annulaire (21), d'un motif de fines rainures (12a) ; et
formation simultanée dans la feuille de caoutchouc (1), lors du laminage du matériau de caoutchouc en une feuille par la paire de rouleaux de laminage (12, 13), de plusieurs rainures (2) dans un motif correspondant audit motif de fines nervures (12a).

2. Procédé selon la revendication 1, comprenant en outre l'étape de stratification de ladite feuille de caoutchouc (1) sur une deuxième feuille, la surface profilée comportant les rainures (2) de la feuille de caoutchouc (1) faisant face à ladite deuxième feuille ; et
fixation de ladite feuille de caoutchouc (1) sur ladite deuxième feuille pour former le composant structural du bandage pneumatique.

3. Procédé de formation d'un composant structural d'un bandage pneumatique selon les revendications 1 ou 2, dans lequel lesdites nervures (12a) ont une section transversale trapézoïdale.

4. Procédé de formation d'un composant structural d'un bandage pneumatique selon l'une quelconque des revendications 1 à 3, dans lequel ledit matériau de caoutchouc est amené entre la paire de rouleaux de laminage (12, 13) après l'extrusion du matériau de caoutchouc dans une extrudeuse à tête de rouleaux (10).

5. Procédé de formation d'un composant structural selon l'une quelconque des revendications 1 à 4, dans lequel une paire de rouleaux de calandrage est utilisée comme rouleaux de laminage (12, 13).

6. Appareil de production d'une feuille de caoutchouc avec une surface profilée comportant des rainures, comprenant :
une paire de rouleaux de laminage (12, 13), dont au moins un est constitué par un rouleau de gaufrage (12) ayant une surface circonférentielle profilée englobant plusieurs surfaces circonférentielles (20, 21) ayant respectivement des circonférences différentes ;
un moyen pour amener un matériau de caoutchouc entre la paire de rouleaux de laminage (12, 13) pour former le matériau de caoutchouc en une feuille de caoutchouc (1) ayant une épaisseur non uniforme, comportant une surface profilée complémentaire de ladite surface profilée (20, 21) du rouleau de gaufrage (12);
**caractérisé en ce que**
ladite surface profilée circonférentielle (20, 21) comporte plusieurs fines nervures (12a), pour former plusieurs rainures complémentaires desdites nervures (12a) dans la surface profilée de la feuille de caoutchouc.

7. Appareil selon la revendication 6, dans lequel lesdites nervures (12a) sont formées dans un motif sur la surface circonférentielle profilée (20, 21) et ont une hauteur comprise dans l'intervalle allant de 0,1 à 0,3 mm et une largeur comprise dans l'intervalle allant de 0,5 à 2,0 mm.

8. Appareil de production d'une feuille de caoutchouc selon les revendications 6 ou 7, dans lequel lesdites nervures (12a) ont une section transversale trapézoïdale.

9. Appareil de production d'une feuille de caoutchouc selon l'une quelconque des revendications 6 à 8, dans lequel ladite paire de rouleaux de laminage (12, 13) est incluse dans une tête d'une extrudeuse à tête de rouleaux (10).

10. Appareil de production d'une feuille de caoutchouc selon l'une quelconque des revendications 6 à 9, dans lequel lesdits rouleaux de laminage (12, 13) sont constitués par une paire de rouleaux de calandrage.

11. Appareil de production d'une feuille de caoutchouc selon l'une quelconque des revendications 6 à 10, dans lequel ledit motif est constitué par des nervures ayant pratiquement une forme en V (12a), symétriques par rapport à une ligne circonférentielle médiane contenue dans un plan perpendiculaire à un axe du rouleau de gaufrage (12), croisant le centre du même axe et s'étendant avec des composants axiaux et circonférentiels de la ligne circonférentielle médiane vers les extrémités opposées du rouleau de gaufrage (12).
